# EUROPÄISCHE PATENTSCHRIFT

(11) **EP 0 638 456 B1**
(45) Veröffentlichungstag und Bekanntmachung des Hinweises auf die Patenterteilung: **18.09.1996**
(21) Anmeldenummer: 94110687.4
(22) Anmeldetag: 08.07.1994
(51) Int. Cl.: B60L 5/20

(54) **Schleifbügel für Stromabnehmer**
Sliding bow for current collector
Arc glissant pour collecteur de courant

(30) Priorität: 07.08.1993 DE 4326614
(43) Veröffentlichungstag der Anmeldung: 15.02.1995
(73) Patentinhaber: SGL CARBON AG, D-65203 Wiesbaden (DE)
(72) Erfinder: Müller, Hans Josef, D-53179 Bonn (DE)

(56) Entgegenhaltungen:
- WO-A-90/13453
- DE-C- 617 411
- NL-A- 123 590

## Beschreibung

Die Erfindung betrifft einen Schleifbügel für Stromabnehmer elektrisch betriebener Fahrzeuge, bestehend aus einem Schleifleistenträger mit im wesentlichen geradem Mittelteil, auf dem eine im wesentlichen aus einem Kohlenstoffmaterial bestehende elektrisch leitfähige Schleifleiste befestigt ist und sich an das Mittelteil beiderseits anschließenden, nach unten gebogenen oder abgewinkelten Auflaufhörnern, die aus einer Unterlage und einer auf der Unterlage befestigten, mit dem zu leitenden Fahrdraht in Berührung kommenden Gleitbelag bestehen.

Mit Schleifbügeln der vorgenannten Art wird elektrischer Strom von einem Fahrdraht auf das Antriebsaggregat und sonstige elektrisch betriebene Systeme eines relativ zu diesem Fahrdraht bewegbaren Fahrzeugs, z.B. einer Elektrolokomotive, übertragen.

Die auf beiden Seiten des Schleifbügels befindlichen Auflaufhörner dienen dazu, einen Fahrdraht, der sich seitlich der im mittleren Teil des Schleifbügels befestigten Schleifleiste befindet, auf diesen mittleren Teil zu leiten oder einen Fahrdraht von der Schleifleiste seitlich abzuleiten. Dies geschieht im Fahrbetrieb beim Wechsel von einem Fahrdrahtabschnitt zum nächsten, beim Überfahren von Weichen oder bei Störungen in der Verspannung des Oberleitungssystems. Die Auflaufhörner dienen nicht der Stromübertragung. Sie können je nach Bedarf elektrisch leitend oder nichtleitend ausgeführt sein.

Besonders bei den heute gefahrenen hohen Geschwindigkeiten sind die Stromabnehmervorrichtungen und an diesen auch die Auflaufhörner durch Beschleunigungen und Schwingungen, durch von den Relativbewegungen zwischen Triebfahrzeug und Fahrdraht herrührenden Schlägen und durch Abrieb starken mechanischen Beanspruchungen ausgesetzt, denen die Konstruktionen nach dem Stand der Technik nicht mehr voll genügen.

Bei bekannten Schleifbügeln bestehen die Leitflächen der Auflaufhörner aus Metall oder aus industriell hergestelltem Kohlenstoffmaterial. Metallische Ausführungen haben wegen der an sie gestellten Konstruktionsanforderungen, die sich aus der Notwendigkeit zu mechanischer Stabilität und aus der erforderlichen Widerstandsfähigkeit gegen erosiven und korrosiven Angriff ergeben, relativ große Materialstärken und damit eine vergleichsweise hohe Masse. Entsprechend kritisch muß ihr Betriebsverhalten unter dem Blickwinkel dynamischer Belastungen und Wirkungen bei hohen Geschwindigkeiten, sowohl auf den Schleifbügel als auch auf den Fahrdraht und dessen Aufhängung beurteilt werden, wenn es nicht gelingt, durch Spezialkonstruktionen die Masse derartiger Anordnungen erheblich zu senken. Ein weiterer Nachteil von Metallgleitflächen ist es, daß infolge des Aufgleitens des Fahrdrahtes auf die Schleifleiste über metallische Gleitflächen Metallteilchen auf die Schleifleisten, speziell nachfolgender Schleifbügel, übertragen werden. Schleifleisten mit derartigen Ablagerungen unterliegen einem erheblich verstärkten Verschleiß.

Den Nachteilen metallischer Beläge von Auflaufhörnern kann durch Verwendung von Kohlenstoffbelägen, die die gleichen Verschleißeigenschaften wie die mittig befindliche, stromübertragende Schleifleiste haben, abgeholfen werden (DE 39 14 675 A1). Doch auch so ausgerüstete Auflaufhörner genügen den an sie gestellten Anforderungen nicht vollständig. Kunstkohlenstoff ist als keramischer Werkstoff sprödbruch-, kerb- und druckspannungsempfindlich. Die Gleitbeläge aus Kohlenstoff sind deshalb nicht durch Klemmen, Schrauben oder Nieten, sondern durch Kleben auf den Unterlagen der Auflaufhörner befestigt. Im rauhen Fahrbetrieb treten nun, verstärkt durch die ständigen Temperaturwechselbeanspruchungen, in der Klebebefestigung Risse und Lockerungen auf, die zum Lösen von Teilen des Gleitbelages führen können. Außerdem brechen infolge der durch Vibrationen und Schwingungen im Oberleitungssystem verursachten Schläge auf den Gleitbelag aus sprödbruchempfindlichem Kunstkohlenstoff Teile aus diesem heraus. Beide Schadensvorgänge bilden eine große Gefahr für den Fahrbetrieb und für in der Nähe des Schadensereignisses befindliche Personen. Im ersten Fall können schwere Schäden am Oberleitungssystem entstehen, im zweiten Fall können die abgelösten Bruchstücke wie Geschosse verletzen. Desweiteren ist aus dem Dokument NL-A-123 590 ein Schleifbügel bekannt, der mit Auflaufhörnern aus Kunstharz versehen ist.

Es war die Aufgabe der Erfindung, den beschriebenen Nachteilen abzuhelfen und einen Schleifbügel für Stromabnehmer zu schaffen, dessen Auflaufhörner Gleitbeläge haben, die fest auf der Unterlage der Auflaufhörner verankert sind, nicht zu Abplatzungen oder Ausbrüchen neigen, die gleichmäßig in Abstimmung mit den Schleifleisten im Mittelteil des Schleifbügels verschleißen und die leicht jeder gewünschten Form angepaßt werden können.

Die Aufgabe wird durch die Merkmale des kennzeichnenden Teils des Patentanspruchs 1 gelöst. Die Unteransprüche enthalten Weiterbildungen und Ausgestaltungen dieses Anspruchs.

Die Unterlagen der Auflaufhörner können aus einem Metall, z.B. Stahl oder Aluminium oder aus einem anderen, Metallen gleichwertigen oder überlegenen Werkstoff, wie z.B. einem faserverstärkten Kunstharzkörper bestehen. Als Verstärkungsfasern werden vorteilhafterweise Glas-, Kohlenstoff- oder Aramidfasern verwendet.

Bei der vorliegenden Lösung besteht der Gleitbelag aus zwei Komponenten, einer füllstoffhaltigen Kunstharzmasse und in die Kunstharzmasse eingebetteten oder diese begrenzenden Metallprofilen. Jede dieser Komponenten erfüllt mehrere Funktionen, die für die Gebrauchstauglichkeit der gesamten Anordnung wichtig sind.

Die Metallprofile sind je nach den Erfordernissen der Unterkonstruktion der Endhörner durch Schraubverbindungen, Nieten, Schweißen, Löten oder Kleben fest mit der jeweiligen Unterlage verbunden. Durch ihre Anordnung ergeben sie in Längsrichtung beidseitig und nach oben offene Kammern. Diese Kammern werden mit der füllstoffhaltigen Kunstharzmasse vollständig gefüllt, wenn diese sich im plastischen, klebefähigen Zustand befindet. Danach wird die füllerhaltige Kunstharzmasse, wenn sie eine Duroplastmatrix enthält, ausgehärtet. Bei Vorliegen einer Thermoplastmatrix wird die Masse nur abgekühlt und erstarren gelassen. Dort, wo die beiden äußeren Metallprofile im Abstand von der äußeren seitlichen Begrenzung der Unterlagen der Auflaufhörner angebracht sind, wird die füllerhaltige Kunstharzmasse so aufgebracht, daß sie auch diese äußeren Profile beidseitig umschließt.

Die längsverlaufenden Metallprofile unterteilen den für den Gleitbelag zur Verfügung stehenden Raum in mindestens eine, vorzugsweise mehrere längsverlaufende Zonen oder Kammern, die an den Enden und nach oben offen sind. Die Längsprofile werden beim Aufbau des Gleitbelags vollständig in die füllerhaltige Kunstharzmasse eingebettet und gegebenenfalls mit dieser bis zu einem gewissen Grade überschichtet. Die Kunstharzmasse ist im verarbeitungsfähigen Zustand plastisch. Deshalb kann sie jeder gewünschten Form angepaßt werden. Sie hat außerdem eine starke Klebkraft und haftet auch nach dem Aushärten oder Erstarren fest auf den sie umgebenden Flächen, nämlich der Unterlagekonstruktion des Auflaufhornes und den Flächen der Längsprofile. Durch die Kammerung stehen mit den Kammerwänden auch zusätzliche Klebeflächen zur Verfügung, an denen die kunstharzhaltigen Teile der Gleitauflage zusätzlich verankert sind. Besonders wirksam wird dieser Effekt, wenn mehrere Längsprofile vorhanden sind, die mehrere kleinere Kammern bilden. Andererseits werden auch die Längsprofile durch die Klebewirkung des Kunstharzes in ihrer Befestigung auf der Unterlage des Auflaufhorns verstärkt. Die Längsprofile können zur oberen offenen Seite der Kammern auch etwas stärker ausgebildet sein, damit die füllerhaltige Kunstharzmasse die Form eines abgeschnittenen Prismas annimmt und zusätzlich noch mechanisch gehalten ist oder zum gleichen Zweck beispielsweise einen leichten Bördel haben. Die füllerhaltige Kunstharzmasse ihrerseits stützt die längsverlaufenden Metallprofile gegen die beim Auf- oder Ablaufen des Fahrdrahts auf sie wirkenden Biegekräfte ab. Keins der Teile der Werkstoffkombination besteht aus einem sprödbruchempfindlichen Kunstkohlenstoffmaterial. Durch die Kammerung und die Wahl nicht sprödbruchempfindlicher Werkstoffe ist der aus Längsprofilen und füllerhaltiger Kunstharzmasse kombinierte Gleitbelag besser gegen Stöße und Schläge geschützt. Abplatzungen und Ausbrüche größerer Stücke aus ihm sind praktisch ausgeschlossen.

Die auf den Unterlagen der Auflaufhörner befestigten längsverlaufenden Profile bestehen bevorzugt aus Kupfer, Messing, Bronze, Aluminium, Eisen oder Stahl.

Die die Metallprofile umgebende Masse ist aus einer Kunstharzmatrix, einem pulver- oder faserförmigen Füller mit einer gewissen Abrasionsfestigkeit und gegebenenfalls ebenfalls pulverförmigen Zusätzen eines Trockenschmiermittels wie Graphit, Molybdändisulfid oder Graphitfluorid zusammengesetzt.

Als Matrixharze werden bevorzugt Duroplaste wie ungesättigte Polyester-, Epoxid-, Phenolformaldehyd- oder Polyurethanharze verwendet. Als besonders vorteilhaft haben sich ungesättigte Polyester und Epoxidharze erwiesen. Es können aber auch Thermoplastharze mit hinreichend hohen Glasübergangstemperaturen eingesetzt werden. Vorteilhaft sind hier Thermoplaste, die selbst eine gewisse Gleitwirkung haben wie Fluorpolymere und Polyamide. Neben dem Polytetrafluorethylen (PTFE) sind hier als Beispiele Polyvinylidenfluorid (PVDF) und Copolymere von Tetrafluorethylen mit Perfluoralkylvinylether (PFA), von Tetrafluorethylen mit Perfluorpropylen oder von Tetrafluorethylen mit Ethylen zu nennen.

Die mechanischen und thermischen sowie die Verarbeitungseigenschaften aller hier genannten Kunstharze werden durch den Zusatz von pulverförmigen bis feinkörnigen oder von faserförmigen Füllstoffen verbessert. Neben der Verbesserung der mechanischen Festigkeit und Zähigkeit muß der füllerhaltige Kunststoff auch bezüglich seiner Abrasionsfestigkeit den die Eigenschaften des Gleitbelags des Auflaufhorns mitbestimmenden Metallprofileinlagen angepaßt und schließlich muß der gesamte Gleitbelag auch auf die Laufeigenschaften der Schleifleiste abgestimmt sein. Es gibt hier eine Vielzahl möglicher Material- bzw. Stoffkombinationen für die in der Praxis vorkommenden unterschiedlichen Anwendungsfälle. Die jeweils geeigneten, den verschiedenen Anwendungsfällen angepaßten Materialkombinationen muß der Fachmann durch entsprechende Versuche ermitteln. Geeignete Füllstoffe sind Metallpulver aus Kupfer, Messing, Bronze, Aluminium, Eisen, Stahl oder Legierungen des Aluminium oder Eisens. Aus der Gruppe der keramischen Werkstoffe finden Glas-, Porzellan- oder Kokspulver, Oxide wie Al₂O₃, TiO₂, SiO₂, Cr₂O₃, Carbide wie SiC, Titancarbid, Wolframcarbid, Borcarbid und Nitride wie kubisches Bornitrid oder Carbobornitrid Verwendung. Bevorzugt werden als Füller oder Füllerzusatz keramische Stapel- oder Kurzfasern mit Längen < 10 mm zugesetzt. Durch sie wird die mechanische Festigkeit der füllerhaltigen Kunstharzmasse erheblich erhöht und sie tragen zur Einstellung der Reib-, bzw. Gleiteigenschaften des Gleitbelags bei. Als derartige Zusätze kommen Glas-, SiC-, Stahl- und Kohlenstoffasern in Frage.

Häufig genügt der Zusatz eines einzigen Füllermaterials nicht, um dem Gleitbelag die bestmöglichen Eigenschaften zu verleihen. In diesen Fällen ist es erforderlich, geeignete Füller zu kombinieren und Füllermischungen zu verwenden. Von dem Gleitbelag werden zum Schutz gegen zu starken Abrieb des Fahrdrahts auch Trockenschmiereigenschaften verlangt. Die Einstellung der gewünschten Trockenschmierwirkung gelingt durch einen Zusatz von bis zu 10 Gew.-% (bezogen auf die Formmasse im verarbeitungsfähigen Zustand) an pulverförmigem Graphit, Graphitfluorid oder Molybdändisulfid.

Im folgenden werden verschiedene Ausbildungsformen erfindungsgemäßer Schleifbügel anhand von Figuren beispielhaft beschrieben.

Es stellen dar:
- Fig. 1,: einen Schleifbügel in der Seitenansicht, d.h. in Richtung des Fahrdrahtes;
- Fig. 2,: eine geschnittene Seitenansicht eines Endabschnitts eines Schleifbügels mit vergrößerter Darstellung eines Auflaufhorns sowie
- Fig. 2a,: einen Querschnitt in der Ebene IIa - IIa der Fig. 2 durch ein Auflaufhorn;
- Fig. 3 bis 9,: vergrößerte Querschnitte durch erfindungsgemäße Ausführungsformen von Auflaufhörnern.

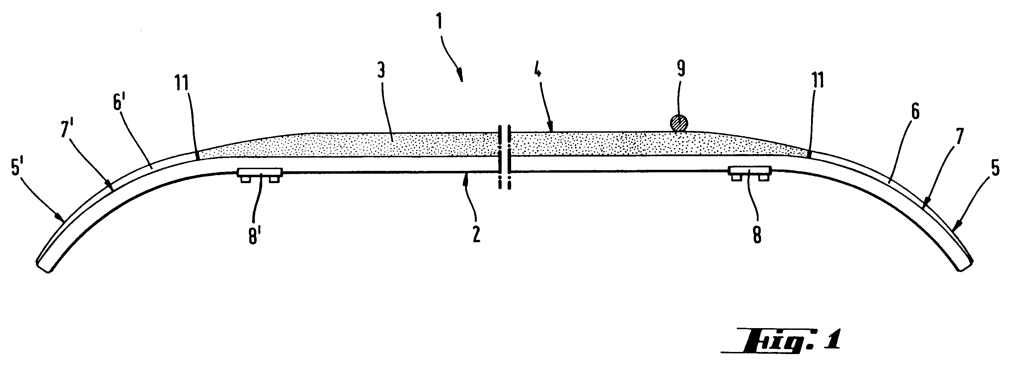

Der in Fig. 1 wiedergegebene Schleifbügel 1 besteht aus einem breiten Mittelteil 4 und den sich daran beiderseits anschließenden Auflaufhörnern 5, 5'. Ein Schleifleistenträger 2 erstreckt sich vom einen Auflaufhorn 5' über das Mittelteil 4 bis zum anderen Auflaufhorn 5. Er ist bevorzugt in Form eines mit Innenrippen versehenen Hohlprofils aus einem Leichtmetall oder einer Leichtmetallegierung ausgebildet und hat an seiner Oberseite hier nicht dargestellte Aufnahmen und Befestigungsmöglichkeiten für eine elektrisch leitfähige Schleifleiste 3 aus Kohlenstoff oder Metall und für die Gleitbeläge 6, 6' der Auflaufhörner 5, 5'. Die Unterlagen 7, 7' der Auflaufhörner 5,5 ' sind hier gebogene Endteile des Schleifleistenträgers 2. Zwischen den Gleitbelägen 6, 6' der Auflaufhörner 5, 5' und der Schleifleiste 3 befindet sich eine Übergangsfuge 11, die möglichst schmal sein soll und die vorzugsweise mit einer Kittmasse geschlossen ist. Am Schleifleistenträger 2 sind Möglichkeiten 8, 8' für die Befestigung des Schleifbügels 1 am nicht dargestellten Pantographen und für die ebenfalls nicht wiedergegebenen Stromleiter vorgesehen. Auf der Schleifleiste 3 ist der Fahrdraht 9 angedeutet, der sich während der Fahrt wegen seiner zick-zack-förmigen Aufhängung im Oberleitungsnetz ständig auf der Schleifleiste 3 hin- und herbewegt und der beim Verlassen der Schleifleiste entweder durch die Auflaufhörner 5, 5' ordnungsgemäß abgeleitet oder durch sie auf die Schleifleiste 3 zurückgeleitet werden muß.

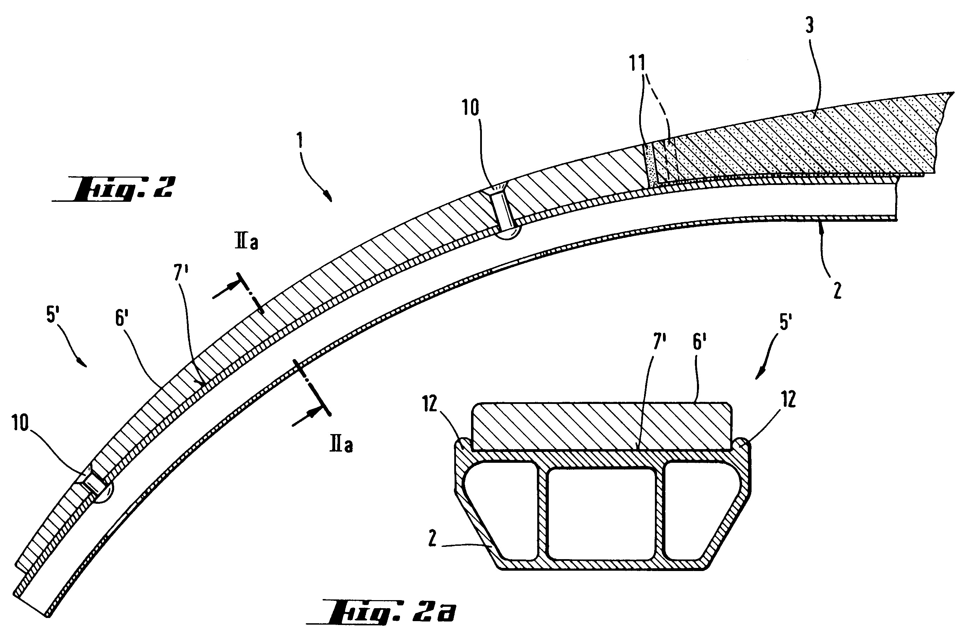

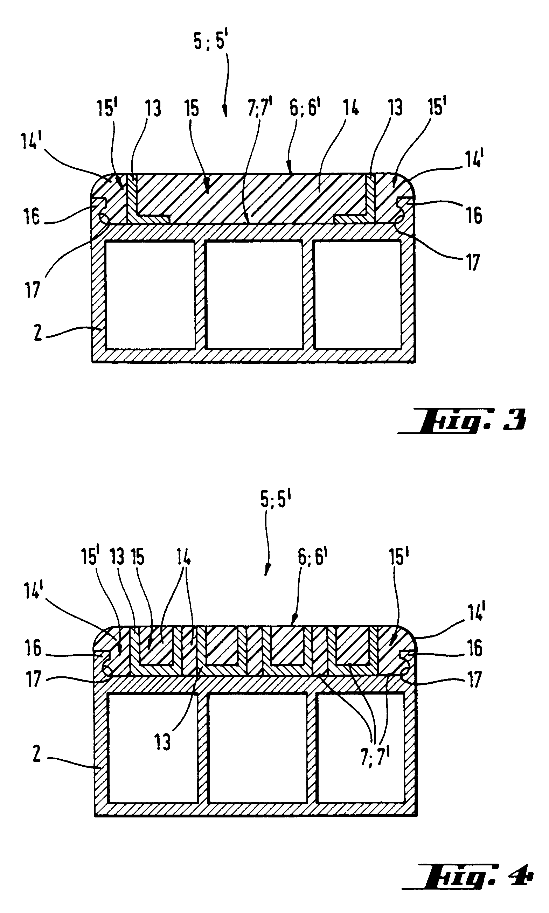

In Fig. 2 ist ein Endteil eines Schleifbügels 1 nach dem Stand der Technik schematisch wiedergegeben. Im rechten oberen Teil ist die durch eine Abschrägung auf das Niveau des Gleitbelages 6' des Auflaufhorns 5' übergehende Schleifleiste 3, die auf dem Schleifleistenträger 2 mittels einer Kittung befestigt ist, abgebildet. Links an die Schleifleiste 3 schließt sich der Gleitbelag 6' des Endhorns 5' an, der im vorliegenden Fall aus einer Edelstahlauflage besteht und durch Nieten 10 auf dem hier die Unterlage 7' des Gleitbelags 6' des Auflaufhorns 5' bildenden Schleifleistenträger 2 befestigt ist. Am Übergang von Schleifleiste 3 auf den Gleitbelag 6' des Auflaufhorns 5' befindet sich eine schräg verlaufende Kittfuge 11. Diese Anordnung soll eine störungsfreie Überleitung des aufgleitenden Fahrdrahts 9 vom Gleitbelag 6' auf die Schleifleiste 3 gewährleisten.

Fig. 2a zeigt einen Querschnitt durch das Auflaufhorn 5' in der Ebene IIa - IIa der Fig. 2. Der Gleitbelag 6' befindet sich auf dem Schleifleistenträger 2, der an dieser Stelle gleichzeitig Unterlage 7' für die Auflaufhornabdeckung 6' ist. Die Unterlage 7' für den Gleitbelag 6' besteht aus einem Hohlprofil aus Leichtmetall. An dessen oberen Seiten sind Führungen 12 angebracht, die dem Gleitbelag 6' zusätzlich seitlichen Halt geben.

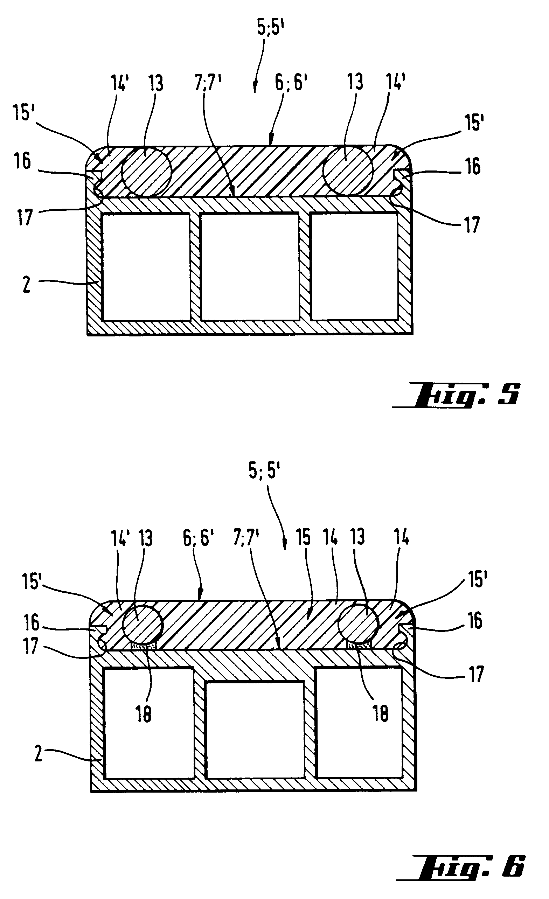

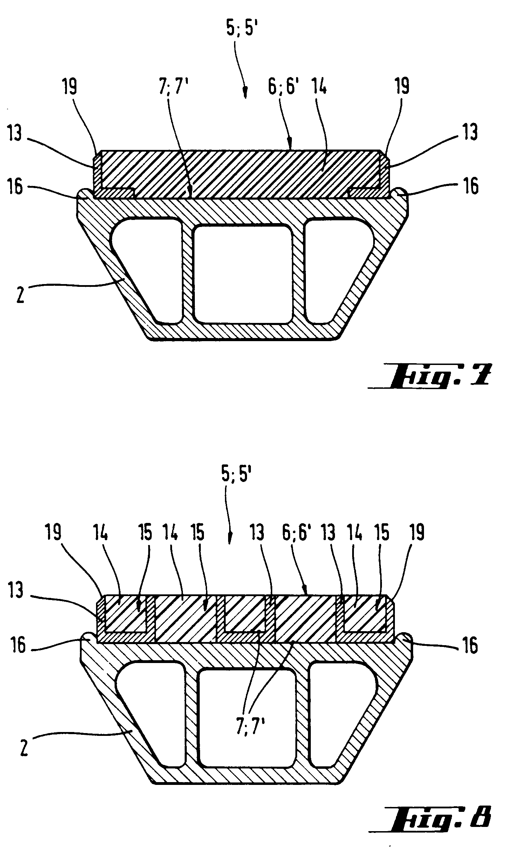

Fig. 3 zeigt eine erfindungsgemäße Ausführungsform eines Gleitbelags 6, 6' auf einem Auflaufhorn 5, 5'. Auf einer Hohlprofilunterlage 7, 7', die unterbrechungslos in den Schleifleistenträger 2 (Fig. 1; 2) übergehen kann, befindet sich ein aus verstärkenden Profileinlagen 13 in L-Form und einer füllerhaltigen Kunstharzmasse 14, 14' bestehender Gleitbelag 6, 6'. Die Längsprofileinlagen 13 sind fest mit der Unterlage 7, 7' verbunden. Die füllerhaltige Kunstharzmasse 14, 14' wird im fließfähigen oder plastischen Zustand durch Aufgießen, Aufspachteln oder Aufpressen so auf die Oberseite der Unterlage 7, 7' aufgebracht, daß die Längsprofile 13 an ihren oberen Kanten mindestens bedeckt sind. Durch ihre Klebefähigkeit im nicht erhärteten Zustand verbindet sich die füllerhaltige Kunststoffmasse 14, 14' fest mit den sie umgebenden Flächen der Unterlage 7, 7' und der Längsprofile 13, so daß sich ein wechselseitiger Verstärkungseffekt ergibt. Die füllerhaltige Kunstharzmasse 14, 14' ist in Kammern 15, 15' eingeschlossen. Eventuell auftretende Schäden am Gleitbelag 6, 6' bleiben so auf die jeweils betroffene Kammer 15, 15' begrenzt. Ein totaler Funktionsausfall eines erfindungsgemäßen Gleitbelags ist somit praktisch unmöglich. Zur besseren mechanischen Verankerung in den außen liegenden Kammern 15' hat das Unterlageprofil 7, 7' an der Innenseite seiner seitlichen Führungsleisten 16 eine Hinterschneidung in Form einer Nut oder Hohlkehle 17. Die in den Außenkammern 15' befindliche füllerhaltige Kunstharzmasse 14', die funktionsbedingt am stärksten beansprucht wird, greift in die Hohlkehlen 17 ein und ist so noch zusätzlich verankert. Um dem auf- oder abgleitenden Fahrdraht eine günstigere Gleitfläche zu bieten, ist die füllerhaltige Kunstharzmasse 14' an ihren oberen Außenseiten abgerundet.

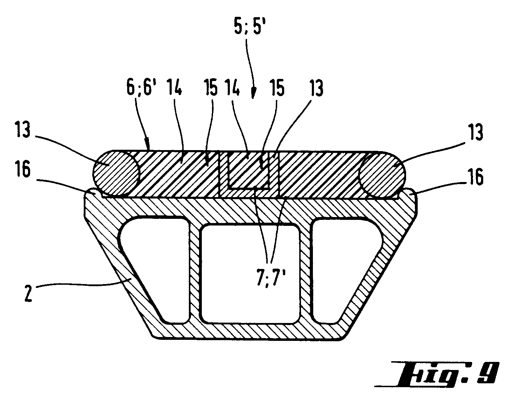

In Fig. 4 ist ein der in Fig. 3 dargestellten Ausführungsform ähnlicher Gleitbelag 6, 6' für ein Auflaufhorn 5, 5' dargestellt. Die Längsprofileinlagen 13 haben hier U-Form und es sind insgesamt 4 Stück davon vorhanden. Dadurch entstehen noch mehr die Stabilität der Anordnung erhöhende Kammern 15.

Die Fig. 5 und 6 geben eine den Fig. 3 und 4 entsprechende Anordnung wieder, bei der die Längsprofileinlagen 13 runde Gestalt haben. Dies kann von Vorteil sein, wenn der füllerhaltige Kunstharzbelag durchgeschliffen sein sollte und der Fahrdraht mit auf dem Längsprofil 13 gleitet.

Fig. 6 zeigt einen Gleitbelag 6, 6' bei dem die Längsprofileinlagen 13 gegen die Unterlage 7, 7' elektrisch isoliert befestigt sind. Eine solche Befestigung kann mittels eines geeigneten Klebers 18 oder z.B. durch eine hier nicht wiedergegebene mechanische Verbindung unter Verwendung von Isolierhülsen und/oder Scheiben an den Berührungszonen zwischen Längsprofil 13, Befestigungsmitteln und Unterkonstruktion 7, 7' erfolgen. Bei dieser Ausführungsform sind die Längsprofileinlagen 13 von der füllerhaltigen Kunstharzmasse überdeckt.

Die Fig. 7, 8 und 9 zeigen Querschnitte von Auflaufhörnern 5, 5', bei denen die äußeren seitlichen Begrenzungen des Gleitbelages 6, 6' aus zwei Längsprofilen 13 bestehen. Vorteilhafterweise sind die Kanten der Längsprofile 13, an denen der Fahrdraht seine erste bzw. letzte Berührung mit dem Gleitbelag 6, 6' hat, gefast 19 (Fig. 7; 8) oder die äußeren Längsprofile 13 bestehen aus Rundmaterial (Fig. 9). Auch hier ist die füllerhaltige Kunstharzmasse 14 durch die Längsprofile 13 gekammert.

In Fig. 7 geschieht dies durch 2 L-förmige Profile 13, in Fig. 8 durch 3 U-förmige Profile 13, wodurch fünf Kammern 15 entstehen und in Fig. 9 durch 2 Rundprofile 13 und ein U-Profil, was zur Einteilung in drei Kammern 15 führt. Selbstverständlich können in allen Ausführungsformen auch Kombinationen verschiedener Profile angewandt werden.

Im folgenden werden als Beispiele zwei Rezepturen von Spachtel- bzw. Formmassen für die Herstellung füllerhaltiger Kunstharzmassen für Gleitbeläge von erfindungsgemäßen Auflaufhörnern angegeben.

### Rezeptur 1

| | |
|---|---|
| Polyesterharz F7 der Fa. Worm, Solingen, | 37 Gew.-% |
| Elektrographit, Korngröße < 63 µm | 3 Gew.-% |
| Ruß | 13 Gew.-% |
| Glas-Stapelfaser, Länge 3 bis 8 mm | 0,2 Gew.-% |
| Glaspulver, gekörnt < 0,2 mm | 46,8 Gew.-% |

### Rezeptur 2

| | |
|---|---|
| Epoxidharz, Araldit 138 M, Lieferant, Ciba Geigy | 45 Gew.-% |
| Elektrographit, Körnung < 63 µm | 4,4 Gew.-% |
| Ruß | 9,6 Gew.-% |
| Glas-Stapelfaser, Länge < 0,5 mm | 3,5 Gew.-% |
| Glaspulver, gekörnt < 0,2 mm | 37,5 Gew.-% |

Zur Herstellung der Formmassen werden die Rezepturbestandteile in in der Fachwelt bekannten langsam laufenden Mischaggregaten mit Knetwirkung, z.B. Z-Arm-Knetern, innig miteinander vermischt. Nach dem Austragen aus dem Mischer sollen sie alsbald verarbeitet werden.

## Patentansprüche

1. Schleifbügel (1) für Stromabnehmer elektrisch betriebener Fahrzeuge, bestehend aus einem Schleifleistenträger (2) mit im wesentlichen geradem Mittelteil, auf dem eine im wesentlichen aus einem Kohlenstoffmaterial bestehende elektrisch leitfähige Schleifleiste (3) befestigt ist
und
sich an das Mittelteil beiderseits anschließenden, nach unten gebogenen oder abgewinkelten Auflaufhörnern (5, 5'),
die aus einer Unterlage (7, 7') und einem sich in Fortsetzung der Schleifleiste erstreckenden, auf der Unterlage (7, 7') befestigten, mit einem zu leitenden Fahrdraht (9) in Berührung kommenden Gleitbelag (6, 6') bestehen,
dadurch gekennzeichnet, daß
auf den Oberseiten der Unterlagen (7, 7') der beiden Auflaufhörner (5, 5') in im wesentlichen in Längsrichtung verlaufende Metallprofile (13) befestigt sind und
daß diese Metallprofile (13) von einer witterungsbeständigen, gleitfähigen, füllerhaltigen abrasionsgeschützten Kunstharzmasse (14, 14') umgeben sind, die sowohl auf dem Unterlagenteil (7, 7') der Auflaufhörner (5, 5') als auch an den Metallprofilen (13) fest haftet.

2. Schleifbügel (1) für Stromabnehmer nach Patentanspruch 1,
dadurch gekennzeichnet, daß
die Unterlagen (7, 7') der Auflaufhörner (5, 5') aus einem Metallprofil bestehen.

3. Schleifbügel (1) für Stromabnehmer nach den Patentansprüchen 1 und 2,
dadurch gekennzeichnet, daß
auf den Oberseiten der Unterlagen (7, 7') der Auflaufhörner (5, 5') im Abstand von den diese Oberseiten seitlich begrenzenden Kanten (16) je ein parallel zu diesen Kanten (16) verlaufendes Metallprofil (13) befestigt ist.

4. Schleifbügel (1) für Stromabnehmer nach Patentanspruch 3,
dadurch gekennzeichnet, daß
die Metallprofile (13) auf der Seite der Gleitkanten für den Fahrdraht (9) abgerundet sind.

5. Schleifbügel (1) für Stromabnehmer nach den Patentansprüchen 3 und 4,
dadurch gekennzeichnet, daß
zwischen den parallel und im Abstand zu den seitlich begrenzenden Kanten (16) befestigten Metallprofilen (13) im Abstand voneinander weitere Metallprofile (13) befestigt sind.

6. Schleifbügel (1) für Stromabnehmer nach den Patentansprüchen 1 und 2,
dadurch gekennzeichnet, daß
auf den Oberseiten der Unterlagen (7, 7') der Auflaufhörner (5, 5') entlang der diese seitlich begrenzenden Kanten (16) je ein Metallprofil (13) befestigt ist.

7. Schleifbügel (1) für Stromabnehmer nach Patentanspruch 6,
dadurch gekennzeichnet, daß
die Metallprofile (13) auf der Seite der Gleitkanten für den Fahrdraht (9) abgerundet sind.

8. Schleifbügel (1) für Stromabnehmer nach den Patentansprüchen 6 und 7,
dadurch gekennzeichnet, daß
zwischen den entlang den seitlich begrenzenden Kanten (16) befestigten Metallprofilen (13) im Abstand voneinander weitere Metallprofile (13) befestigt sind.

9. Schleifbügel (1) für Stromabnehmer nach den Patentansprüchen 1 bis 8,
dadurch gekennzeichnet, daß
die auf den Unterlagen (7, 7') der Auflaufhörner (5, 5') befestigten Profile (13) aus der Gruppe der Metalle Kupfer, Messing, Bronze, Aluminium, Eisen, Stahl bestehen.

10. Schleifbügel (1) für Stromabnehmer nach den Patentansprüchen 1 bis 9,
dadurch gekennzeichnet, daß
das Matrixharz der füllerhaltigen Kunstharzmasse (14, 14') ein Kunstharz aus der Gruppe der Duroplasten ist.

11. Schleifbügel (1) für Stromabnehmer nach Patentanspruch 10,
dadurch gekennzeichnet, daß
das Matrixharz der füllerhaltigen Kunstharzmasse (14, 14') ein Kunstharz aus der Gruppe der ungesättigten Polyester ist.

12. Schleifbügel (1) für Stromabnehmer nach Patentanspruch 10,
dadurch gekennzeichnet, daß
das Matrixharz der füllerhaltigen Kunstharzmasse (14, 14') ein Kunstharz aus der Gruppe der Epoxidharze ist.

13. Schleifbügel (1) für Stromabnehmer nach den Patentansprüchen 1 bis 9,
dadurch gekennzeichnet, daß
das Matrixharz der füllerhaltigen Kunstharzmasse (14, 14') ein Kunstharz aus der Grupe der Thermoplasten ist.

14. Schleifbügel (1) für Stromabnehmer nach Patentanspruch 13,
dadurch gekennzeichnet, daß
das Matrixharz der füllerhaltigen Kunstharzmasse (14, 14') ein Kunstharz aus der Gruppe der Fluorpolymeren ist.

15. Schleifbügel (1) für Stromabnehmer nach Patentanspruch 13,
dadurch gekennzeichnet, daß
das Matrixharz der füllerhaltigen Kunstharzmasse (14, 14') ein Kunstharz aus der Gruppe der Polyamide ist.

16. Schleifbügel (1) für Stromabnehmer nach den Patentansprüchen 1 bis 15,
dadurch gekennzeichnet, daß
das Matrixharz der füllerhaltigen Kunstharzmasse (14, 14') einen Füller enthält, der der füllerhaltigen Kunstharzmasse (14, 14') Widerstandsfähigkeit gegen Abrasion verleiht.

17. Schleifbügel (1) für Stromabnehmer nach Patentanspruch 16,
dadurch gekennzeichnet, daß
der Füller ein Material aus der Gruppe Al₂O₃, SiO₂, SiC, TiO₂, Cr₂O₃, Titancarbid, Wolframcarbid, Borcarbid, Corbobornitrid, kubisches Bornitrid, Glas, Porzellan oder Koks ist.

18. Schleifbügel (1) für Stromabnehmer nach Patentanspruch 16,
dadurch gekennzeichnet, daß
der Füller eine Stapel- oder Kurzfaser aus der Gruppe Glas, Siliciumcarbid, Stahl und Kohlenstoff ist.

19. Schleifbügel (1) für Stromabnehmer nach Patentanspruch 16,
dadurch gekennzeichnet, daß
der Füller ein Metallpulver aus der Gruppe Kupfer, Messing, Bronze, Aluminium, Eisen, Stahl oder Legierungen des Aluminiums oder Eisens ist.

20. Schleifbügel (1) für Stromabnehmer nach Patentanspruch 16,
dadurch gekennzeichnet, daß
Mischungen der in den Ansprüchen 17, 18 und 19 genannten Füllermaterialien verwendet werden.

21. Schleifbügel (1) für Stromabnehmer nach den Patentansprüchen 1 bis 20,
dadurch gekennzeichnet, daß
die füllerhaltige Kunstharzmasse (14, 14') zusätzlich eine Füllerkomponente aus einem Stoff mit Trockenschmiereigenschaften enthält.

22. Schleifbügel (1) für Stromabnehmer nach Patentanspruch 21,
dadurch gekennzeichnet, daß
der Stoff mit Trockenschmiereigenschaften ein Stoff aus der Gruppe Graphit, Graphitfluorid, Molybdändisulfid ist.

## Claims

1. Contacting bow (1) for current collectors of electrically operated vehicles, consisting of a contacting strip support (2) with a substantially straight centre part, on which there is fastened an electrically conductive contacting strip (3) consisting substantially of a carbon material, and
rising horns (5, 5') which are connected to both sides of the centre part and are bent downwards or are angular, which consist of a support (7, 7') and a sliding cover (6, 6') extending as a continuation of the contacting strip, fastened to the support (7, 7') and coming into contact with a contact wire (9) to be guided,
characterized in that
on the upper sides of the supports (7, 7') of the two rising horns (5, 5') are fastened metal sections (13) which extend substantially in the longitudinal direction, and
in that these metal sections (13) are surrounded by a weather-resistant, slidable, filler-containing abrasion-protected synthetic-resin material (14, 14') which adheres firmly both to the support part (7, 7') of the rising horns (5, 5') and to the metal sections (13).

2. Contacting bow (1) for current collectors according to claim 1, characterized in that the supports (7, 7') of the rising horns (5, 5') consist of a metal section.

3. Contacting bow (1) for current collectors according to claims 1 and 2, characterized in that there is fastened to the upper sides of each of the supports (7, 7') of the rising horns (5, 5') at a distance from the edges (16) which laterally limit these upper sides, a metal section (13) extending parallel to these edges (16).

4. Contacting bow (1) for current collectors according to claim 3, characterized in that the metal sections (13) are rounded on the side of the contacting edges for the contact wire (9).

5. Contacting bow (1) for current collectors according to claims 3 and 4, characterized in that between the metal sections (13) fastened parallel to and at a distance from the laterally limiting edges (16) there are fastened further metal sections (13) at a distance from each other.

6. Contacting bow (1) for current collectors according to claims 1 and 2, characterized in that a metal section (13) is fastened on the upper sides of the supports (7, 7') of the rising horns (5, 5') along the edges (16) laterally limiting them.

7. Contacting bow (1) for current collectors according to claim 6, characterized in that the metal sections (13) are rounded on the side of the contacting edges for the contact wire (9).

8. Contacting bow (1) for current collectors according to claims 6 and 7, characterized in that between the metal sections (13) fastened along the laterally limiting edges (16) there are fastened further metal sections (13) at a distance from each other.

9. Contacting bow (1) for current collectors according to claims 1 to 8, characterized in that the sections (13) fastened to the supports (7, 7') of the rising horns (5, 5') consist of the group of metals copper, brass, bronze, aluminium, iron, steel.

10. Contacting bow (1) for current collectors according to claims 1 to 9, characterized in that the matrix resin of the filler-containing synthetic-resin material (14, 14') is a synthetic resin from the duroplastics group.

11. Contacting bow (1) for current collectors according to claim 10, characterized in that the matrix resin of the filler-containing synthetic-resin material (14, 14') is a synthetic resin from the unsaturated polyesters group.

12. Contacting bow (1) for current collectors according to claim 10, characterized in that the matrix resin of the filler-containing synthetic-resin material (14, 14') is a synthetic resin of the epoxide resins group.

13. Contacting bow (1) for current collectors according to claims 1 to 9, characterized in that the matrix resin of the filler-containing synthetic-resin material (14, 14') is a synthetic resin of the thermoplastics group.

14. Contacting bow (1) for current collectors according to claim 13, characterized in that the matrix resin of the filler-containing synthetic-resin material (14, 14') is a synthetic resin of the fluoropolymers group.

15. Contacting bow (1) for current collectors according to claim 13, characterized in that the matrix resin of the filler-containing synthetic-resin material (14, 14') is a synthetic resin of the polyamides group.

16. Contacting bow (1) for current collectors according to claims 1 to 15, characterized in that the matrix resin of the filler-containing synthetic-resin material (14, 14') contains a filler which imparts to the filler-containing synthetic-resin material (14, 14') resistance to abrasion.

17. Contacting bow (1) for current collectors according to claim 16, characterized in that the filler is a material from the group Al₂O₃, SiO₂, SiC, TiO₂, Cr₂O₃, titanium carbide, tungsten carbide, boron carbide, carboboron nitride, cubic boron nitride, glass, porcelain or coke.

18. Contacting bow (1) for current collectors according to claim 16, characterized in that the filler is a staple fibre or short fibre from the group glass, silicon carbide, steel and carbon.

19. Contacting bow (1) for current collectors according to claim 16, characterized in that the filler is a metal powder for the group copper, brass, bronze, aluminium, iron, steel or alloys of aluminium or iron.

20. Contacting bow (1) for current collectors according to claim 16, characterized in that mixtures of the filler materials named in claims 17, 18 and 19 are used.

21. Contacting bow (1) for current collectors according to claims 1 to 20, characterized in that the filler-containing synthetic-resin material (14, 14') additionally contains a filler component formed of a substance with dry lubrication properties.

22. Contacting bow (1) for current collectors according to claim 21, characterized in that the substance with dry lubrication properties is a substance from the group graphite, graphite fluoride, molybdenum disulphide.

## Revendications

1. Archet de frottement (1) pour pantographes de véhicules mus électriquement, consistant en un support de barre de frottement (2) avec une partie centrale sensiblement droite, sur laquelle est fixée une barre de frottement (3), électriquement conductrice, réalisée en une matière à base de carbone et en des cornes d'archet (5, 5,), se raccordant des deux côtés à la partie du milieu, qui sont coudées ou pliées vers le bas, cornes qui consistent en une embase (7, 7') et en un revêtement de glissement (6, 6') s'étendant à la suite de la barre de frottement, fixé sur l'embase (7, 7'), revêtement de glissement qui vient en contact avec un conducteur aérien à guider (9), archet de frottement
caractérisé en ce que
sur les faces supérieures des embases (7, 7') des deux cornes d'archet (5, 5'), on fixe des profilés métalliques (13) qui s'étendent sensiblement dans le sens de la longueur et en ce que ces profilés métalliques (13) sont entourés d'une masse de résine synthétique (14, 14') résistant aux intempéries, susceptibles de glisser, contenant une charge et protégée contre l'abrasion, masse de résine synthétique qui adhère de façon solidaire à la partie inférieure de l'embase (7, 7') des cornes d'archet (5, 5') comme aussi aux profilés métalliques (13).

2. Archet de frottement (1) pour pantographe selon la revendication 1,
caractérisé en ce que
les embases (7, 7') des cornes d'archet (5, 5') consistent en un profilé métallique.

3. Archet de frottement (1) pour pantographe selon les revendications 1 et 2,
caractérisé en ce que
l'on fixe sur les faces supérieures des embases (7, 7') des cornes d'archet (5, 5') à une certaine distance des bords (16) qui délimitent latéralement ces faces supérieures chaque fois un profilé métallique (13) qui s'étend parallèlement à ces bords (16).

4. Archet de frottement (1) pour pantographe selon la revendication 3,
caractérisé en ce que
les profilés métalliques (13) sont arrondis sur le côté des bords de glissement pour le conducteur aérien (9).

5. Archet de frottement (1) pour pantographe selon les revendications 3 et 4,
caractérisé en ce qu'
entre les profilés métalliques (13) fixés parallèlement aux bords (16) de délimitation latérale et à une certaine distance de ceux-ci, on fixe d'autres profilés métalliques (13) à distance les uns des autres.

6. Archet de frottement (1) pour pantographe selon les revendications 1 et 2,
caractérisé en ce que
sur les faces supérieures des embases (7, 7') des cornes d'archet (5, 5') on fixe chaque fois un profilé métallique (13) le long des bords qui délimitent celles-ci latéralement.

7. Archet de frottement (1) pour pantographe selon la revendication 6,
caractérisé en ce que
les profilés métalliques (13) sont arrondis sur le côté des bords de glissement pour le conducteur aérien (9).

8. Archet de frottement (1) pour pantographe selon les revendications 6 et 7,
caractérisé en ce qu'
entre les profilés métalliques (13) fixés le long des bords de délimitation latérale (16), on fixe d'autres profilés métalliques (13) à distance les uns des autres.

9. Archet de frottement (1) pour pantographe selon les revendications 1 à 8,
caractérisé en ce que
les profilés (13) fixés sur les embases (7, 7') des cornes d'archet (5, 5') font partie du groupe des métaux suivants : cuivre, laiton, bronze, aluminium, fer, acier.

10. Archet de frottement (1) pour pantographe selon les revendications 1 à 9,
caractérisé en ce que
la résine de matrice de la masse de résine synthétique (14, 14'), contenant une charge, est une résine synthétique du groupe des résines thermodurcissables.

11. Archet de frottement (1) pour pantographe selon la revendication 10,
caractérisé en ce que
la résine de matrice de la masse de la résine synthétique (14, 14'), contenant une charge, est une résine synthétique des groupes des polyesters non saturés.

12. Archet de frottement (1) pour pantographe selon la revendication 10,
caractérisé en ce que
la résine de la matrice de la masse de résine synthétique (14, 14'), contenant une charge, est une résine synthétique du groupe des résines époxydes.

13. Archet de frottement (1) pour pantographe selon les revendications 1 à 9,
caractérisé en ce que
la résine de la matrice de la masse de résine synthétique (14, 14'), contenant une charge est une résine synthétique du groupe des résines thermoplastiques.

14. Archet de frottement (1) pour pantographe selon la revendication 13,
caractérisé en ce que
la résine de la matrice de la masse de résine synthétique (14, 14'), contenant une charge est une résine synthétique du groupe des polymères fluorés.

15. Archet de frottement (1) pour pantographe selon la revendication 13,
caractérisé en ce que
la résine de la matrice de la masse de résine synthétique (14, 14'), contenant une charge, est une charge synthétique du groupe des polyamides.

16. Archet de frottement (1) pour pantographe selon les revendications 1 à 15,
caractérisé en ce que
la résine de la matrice de la masse de résine synthétique (14, 14'), contenant une charge contient une charge qui confère à la masse synthétique (14, 14'), contenant une charge une aptitude à résister à l'abrasion.

17. Archet de frottement (1) pour pantographe selon la revendication 16,
caractérisé en ce que
la charge est constituée par une matière du groupe suivant : Al₂O₃, SiO₂, SiC, TiO₂, Cr₂O₃, carbure de titane, carbure de tungstène, carbure de bore, nitrure de bore et de carbone, nitrure cubique de bore, verre, porcelaine ou coke.

18. Archet de frottement (1) pour pantographe selon la revendication 16,
caractérisé en ce que
la charge est une fibre synthétique ou une fibre courte du groupe composé du verre, du carbure de silicium, de l'acier et du carbone.

19. Archet de frottement (1) pour pantographe selon la revendication 16,
caractérisé en ce que
la charge est une poudre métallique du groupe suivant : cuivre, laiton, bronze, aluminium, fer, acier ou alliages d'aluminium ou de fer.

20. Archet de frottement (1) pour pantographe selon la revendication 16,
caractérisé en ce que
l'on utilise des mélanges des matières de remplissage composant la charge mentionnées dans les revendications 17, 18 et 19.

21. Archet de frottement (1) pour pantographe selon les revendications 1 à 20,
caractérisé en ce que
la masse de résine synthétique (14, 14') contenant une charge contient en plus un composant de charge en une matière ayant des propriétés de lubrification à sec.

22. Archet de frottement (1) pour pantographe selon la revendication 21,
caractérisé en ce que
la matière qui a des propriétés de lubrification à sec est une matière du groupe graphite, fluorure de graphite, disulfure de molybdène.
